# EUROPÄISCHE PATENTSCHRIFT

(11) **EP 2 415 675 B1**
(45) Veröffentlichungstag und Bekanntmachung des Hinweises auf die Patenterteilung: **05.12.2012**
(21) Anmeldenummer: 10172001.9
(22) Anmeldetag: 05.08.2010
(51) Int. Cl.: B65B 43/52, B65B 59/00, B65G 17/26

(54) **Vorrichtung zum Fördern von Gegenständen in Verpackungsmaschinen**
Device for transporting objects in packaging machines
Dispositif de transport d'objets dans des machines d'emballage

(43) Veröffentlichungstag der Anmeldung: 08.02.2012
(73) Patentinhaber: Uhlmann Pac-Systeme GmbH & Co. KG, 88471 Laupheim (DE)
(72) Erfinder: Felk, Günter, 89079 Ulm (DE); Fochler, Fritz, 89171 Illerkirchberg (DE); Stahl, Joachim, 89233 Neu-Ulm (DE)
(74) Vertreter: Wächter, Jochen

(56) Entgegenhaltungen:
- DE-A1- 10 123 220
- DE-A1- 19 803 297
- DE-A1-102006 007 986

## Beschreibung

Die Erfindung betrifft eine Vorrichtung zum Fördern von Gegenständen in Verpackungsmaschinen.

Insbesondere in der pharmazeutischen Industrie werden derartige Vorrichtungen zum Transport von Faltschachteln verwendet, in die Stapel von Blisterverpackungen eingeschoben werden sollen. Üblicherweise bestehen derartige Vorrichtungen zum Fördern von Gegenständen in Verpackungsmaschinen aus zwei umlaufenden Transporteinheiten, meistens in Form von Rollenketten, die für die Fortbewegung der Gegenstände sorgen. Die erste Transporteinheit ist dabei ebenso wie die zweite Transporteinheit mit Mitnahmeelementen, beispielsweise in Form von nach oben abragenden Fingern, ausgestattet, welche zur Lagerung der Gegenstände dienen. Dabei sind der ersten Transporteinheit Mitnahmeelemente zugeordnet, die als schiebende Elemente fungieren, während die Mitnahmeelemente der zweiten Transporteinheit als gegenhaltende Elemente fungieren. Der Abstand zwischen den schiebenden Mitnahmeelementen und den gegenhaltenden Mitnahmeelementen, der durch die relative Lage der beiden Transporteinrichtungen zueinander definiert ist, bestimmt somit die Größe der Aufnahmefläche für die Gegenstände.

Bei einer Formatumstellung auf andere Verpackungsgrößen muss daher eine relative Verschiebung der schiebenden Mitnahmeelemente zu den gegenhaltenden Mitnahmeelementen stattfinden. Dies wird durch eine gegenseitige Verschiebung der beiden Transporteinheiten zueinander erreicht. Dabei müssen die Abstände millimetergenau eingehalten werden.

In modernen Vorrichtungen zum Fördern von Gegenständen in Verpackungsmaschinen, wie beispielsweise in DE 19803297 A1 gezeigt, werden die beiden umlaufenden Transporteinheiten jeweils von zwei Wellen angetrieben, von denen eine erste Welle mit einem Antriebsmotor verbunden ist und mit der zweiten Welle über beispielsweise einen Riementrieb verbunden ist. Bei einer Formatumstellung werden in der Regel manuelle Bedienvorgänge notwendig.

Aus DE 101 23 220 A1 ist es bekannt, eine selbsthemmende Verstelleinrichtung vorzusehen, welche mit einer ersten Welle verbunden ist und manuell über eine Öffnung betätigt werden kann. Bei der Verstellung wird ein Adapter relativ zur ersten Welle verdreht, und diese Drehbewegung überträgt sich über einen Zahnriemen und eine Zahnscheibe auf die zweite Welle, deren Winkellage sich somit gegenüber der ersten Welle ändert. Nach dem Verstellvorgang müssen Referenz- und Kontrollfahrten durchgeführt werden.

In DE 10 2006 007 986 A1 wird vorgeschlagen, die beiden Wellen mittels einer nicht näher spezifizierten Kupplung zu verbinden, sodass der Antrieb in einer Normalbetriebsart beide Transporteinheiten parallel zueinander und in einer Formatverstellbetriebsart relativ zueinander bewegt. Einzelheiten einer technischen Konkretisierung werden jedoch nicht vorgestellt. Grundsätzlich erfordert jede automatische Formatverstellung einen hohen Aufwand an Einzelteilen und Steuerungstechnik.

Der vorliegenden Erfindung liegt die Aufgabe zugrunde, eine Vorrichtung zum Fördern von Gegenständen in Verpackungsmaschinen zu schaffen, bei der die Umstellung auf ein neues Format der Gegenstände mit geringem mechanischen Aufwand, besonders schnell und mit genauer Justierung möglich ist.

Erfindungsgemäß weist die Vorrichtung zum Fördern von Gegenständen in Verpackungsmaschinen eine erste umlaufende Transporteinheit auf, die erste Mitnahmeelemente bewegt, außerdem eine zweite umlaufende Transporteinheit, die zweite Mitnahmeelemente bewegt, eine von einem Motor angetriebene Antriebswelle, welche die erste umlaufende Transporteinheit antreibt, eine Hilfswelle, welche die zweite umlaufende Transporteinheit antreibt, und ein riemenförmiges oder kettenförmiges Verbindungselement zur Antriebsübertragung von der Antriebswelle auf die Hilfswelle. Dabei ist das Verbindungselement zwischen der Antriebswelle und der Hilfswelle über eine Mehrzahl von stationär gelagerten Hilfsrollen und über mindestens zwei senkrecht zu ihrer Drehachse gleichzeitig verschiebbare Verstellrollen derart geführt, dass eine Verschiebung der Verstellrollen eine Bewegung des Verbindungselements auf der Hilfswelle und damit eine Veränderung der Winkelposition der Hilfswelle bewirkt.

Mit dieser Ausgestaltung kann der komplexe Vorgang einer Formatverstellung auf einfache und schnelle Weise, notfalls sogar während des Betriebs der Vorrichtung, vorgenommen werden, wobei eine hochpräzise Justierung möglich ist.

In einer bevorzugten Ausführungsform sind die Verstellrollen in dieselbe Richtung verschiebbar. Dadurch erfordert die Einrichtung zur Formatverstellung lediglich einen geringen Platzbedarf.

Ebenso ist es vorteilhaft, wenn die Verstellrollen gleich groß sind und um dieselbe Weglänge verschiebbar sind. Auf diese Weise wird eine mechanisch möglichst einfache Konstruktion geschaffen, bei welcher die Justierung besonders einfach ist.

Sowohl die Hilfsrollen als auch die Verstellrollen können dabei achsensymmetrisch zu einer Symmetrieachse angeordnet sein, wodurch die Berechnung der notwendigen Verschiebewege weiter vereinfacht wird. Idealerweise verläuft dabei die Symmetrieachse durch die Drehachsen der Antriebswelle und der Hilfswelle.

Bei Verschiebung der Verstellrollen mittels des Verbindungselements erzielt man eine optimale Kraftübertragung auf die Hilfswelle, wenn ein Abschnitt des Verbindungselements, welcher in eine der Verstellrollen einläuft, parallel verläuft zu einem Abschnitt des Verbindungselements, welcher aus der Verstellrolle ausläuft.

In einer bevorzugten Ausführungsform ist das Verbindungselement ein Zahnriemen, ist auf der Antriebswelle und der Hilfswelle jeweils ein Zahnriemenrad angeordnet und sind die Verstellrollen Zahnriemenräder.

Alternativ kann das Verbindungselement eine Rollenkette sein, ist auf der Antriebswelle und der Hilfswelle jeweils ein Kettenrad angeordnet und sind die Verstellrollen Kettenräder.

Zur sicheren Führung des Verstellmechanismus sind die Verstellrollen mittels einer Linearführungseinheit verschiebbar.

Die Linearführungseinheit kann dabei eine Formatverstellplatte aufweisen, die fest mit den Verstellrollen verbunden ist und in mindestens einer geraden Führungsschiene geführt ist.

Eine exakte Verschiebung und somit eine millimetergenaue Verdrehung der Hilfswelle erzielt man, wenn die Verstellrollen über einen Verstellmotor mit integriertem Absolutgeber verschiebbar sind. Dann sind auch keine Referenzfahrten und Kontrollmessungen bei einer Formatumstellung notwendig.

In einer Ausführungsform treibt der Verstellmotor eine Spindel der Linearführungseinheit an.

Um beide Transporteinheiten in ihrem Umlenkungsbereich antreiben zu können, ist die Hilfswelle vorzugsweise mittels eines Riementriebs mit einer drehbar auf der Antriebswelle gelagerten Eingriffseinheit verbunden, die mit der zweiten umlaufenden Transporteinheit in Eingriff steht und diese damit antreibt. Dadurch sind die Antriebsmechanismen für beide Transporteinheiten auf der Antriebswelle und somit unmittelbar nebeneinander gelagert.

In einer bevorzugten Ausführungsform kann die Eingriffseinheit ein drehbar auf der Antriebswelle gelagertes Zahnriemenrad aufweisen, welches mit dem Riementrieb verbunden ist und welches fest mit einem ebenfalls drehbar auf der Antriebswelle gelagerten Kettenrad verbunden ist, das wiederum in die zweite umlaufende Transporteinheit eingreift und diese damit antreibt.

Weitere Merkmale und Vorteile der vorliegenden Erfindung ergeben sich aus der nachfolgenden Beschreibung unter Bezugnahme auf die Zeichnungen.
- Fig. 1: ist eine schematische Perspektivansicht wesentlicher Elemente einer erfindungsgemäßen Vorrichtung zum Fördern von Gegenständen in Verpackungsmaschinen;
- Fig. 2: ist eine schematische Perspektivansicht der Antriebssektion einer erfindungsgemäßen Vorrichtung zum Fördern von Gegenständen in Verpackungsmaschinen;
- Fig. 3: ist ein Querschnitt durch die Antriebssektion einer erfindungsgemäßen Vorrichtung zum Fördern von Gegenständen in Verpackungsmaschinen;
- Fig. 4: ist eine schematische Perspektivansicht der Antriebssektion einer erfindungsgemäßen Vorrichtung zum Fördern von Gegenständen in Verpackungsmaschinen mit einem Verstellmotor für die Verstellrollen;
- Fig. 5: ist eine schematische Perspektivansicht der Antriebssektion aus Fig. 4 mit einer Linearführungseinheit zur Verschiebung der Verstellrollen;
- Fig. 6: ist eine perspektivische Draufsicht auf den Ausschnitt aus Fig. 5;
- Fig. 7: ist eine schematische Perspektivansicht der Rückseite der Antriebssektion aus Fig. 6; und
- Fig. 8: ist eine perspektivische Schnittdarstellung der Antriebssektion aus Fig. 6.

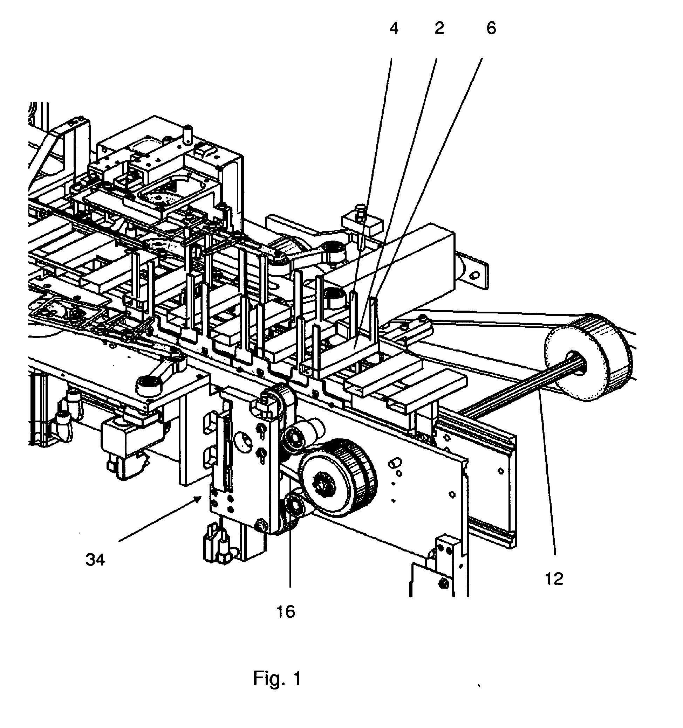

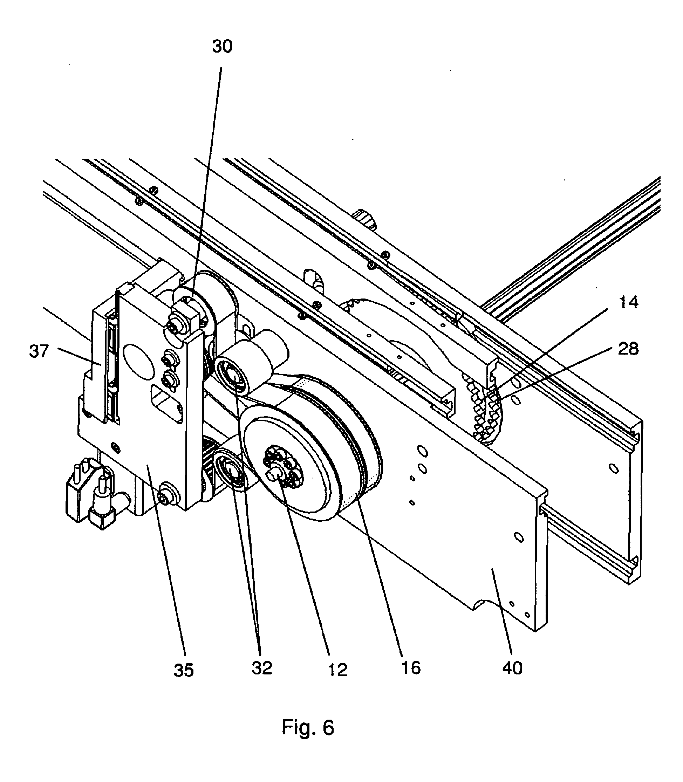

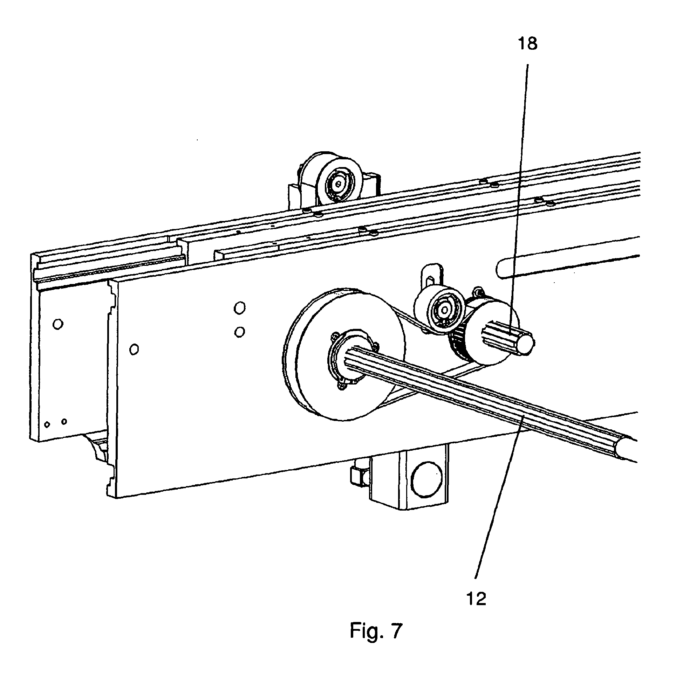

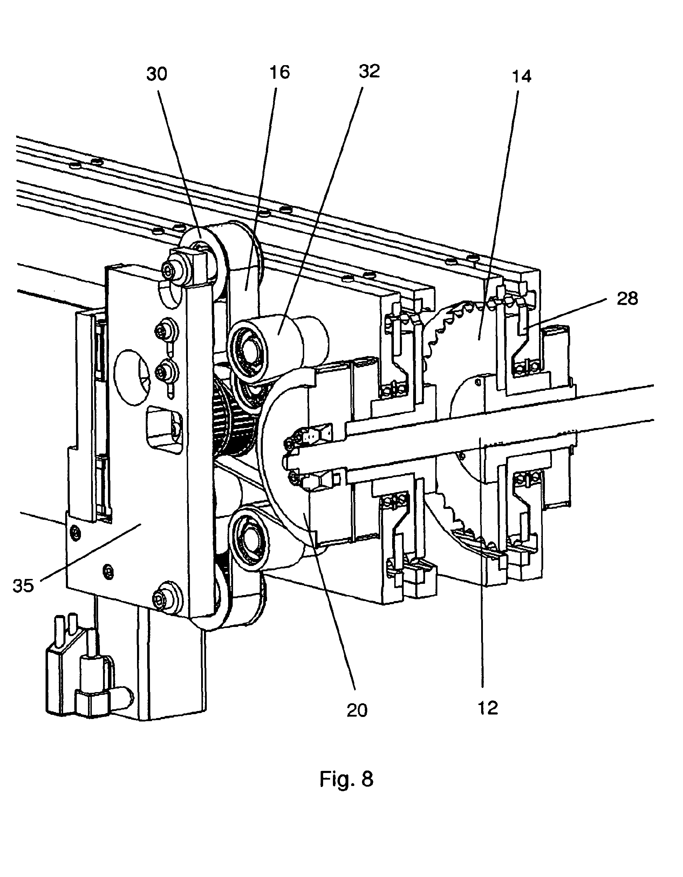

Die Erfindung wird unter Bezugnahme auf das in den Figuren 1 bis 8 dargstellte Ausführungsbeispiel im Folgenden detailliert beschrieben.

Um Gegenstände 2, insbesondere Faltschachteln, im Verpackungsprozess zu transportieren, müssen an die Größe der Gegenstände 2 angepasste Aufnahmezellen gebildet werden. Da diese Aufnahmezellen je nach Format der zu transportierenden Gegenstände 2 eine unterschiedliche Breite aufweisen können, soll die Größe der Aufnahmezelle leicht verstellt werden können.

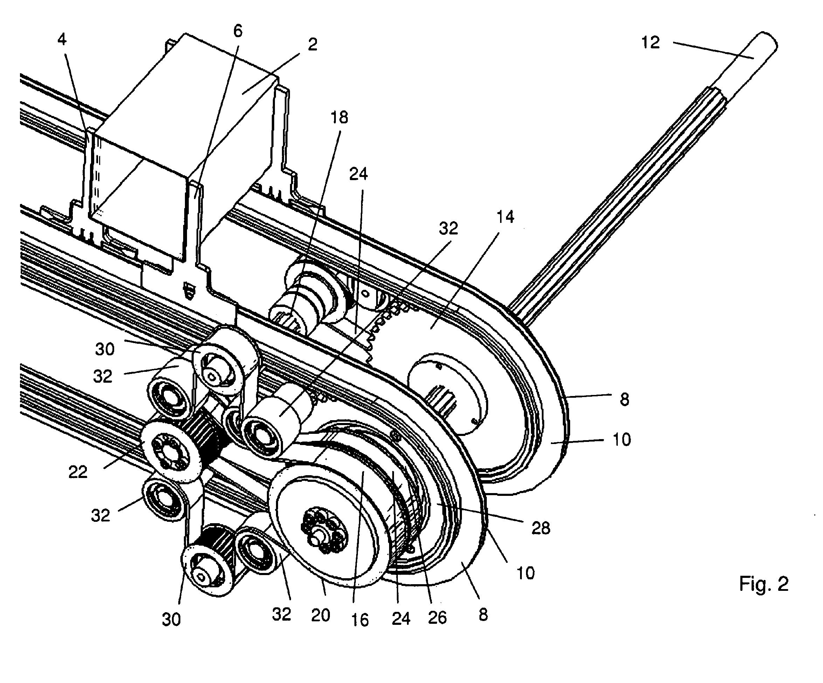

Gemäß dem vorliegenden Ausführungsbeispiel wird jede Aufnahmezelle durch erste Mitnahmeelemente 4 und zweite Mitnahmeelemente 6 gebildet, siehe vor allem Fig. 1 und 2. Die ersten Mitnahmeelemente 4 sind im dargestellten Ausführungsbeispiel als schiebende Mitnahmeelemente ausgebildet, während die zweiten Mitnahmeelemente 6 als gegenhaltende Mitnahmeelemente ausgebildet sind. Ebenso ist eine umgekehrte Konfiguration denkbar. Die Mitnahmeelemente 4, 6 können wie dargestellt als Finger, aber auch durchgehend als Platte ausgestaltet sein.

In jedem Fall sind die ersten Mitnahmeelemente 4 an einer ersten umlaufenden Transporteinheit 8 befestigt, während die zweiten Mitnahmeelemente 6 an einer zweiten umlaufenden Transporteinheit 10 befestigt sind und von diesen jeweils abragen. Die erste Transporteinheit 8 und die zweite Transporteinheit 10 können vorzugsweise als Rollenketten ausgebildet sein, die während des Betriebs der Vorrichtung eine feste Zuordnung zueinander haben. Für eine Formatverstellung muss diese feste Zuordnung aufgehoben werden und die Transporteinheiten 8, 10 müssen gegeneinander verschoben werden. Dadurch ändert sich der Abstand der ersten Mitnahmeelemente 4 zu den zweiten Mitnahmeelementen 6 und somit kann die Größe der Aufnahmezelle verändert werden.

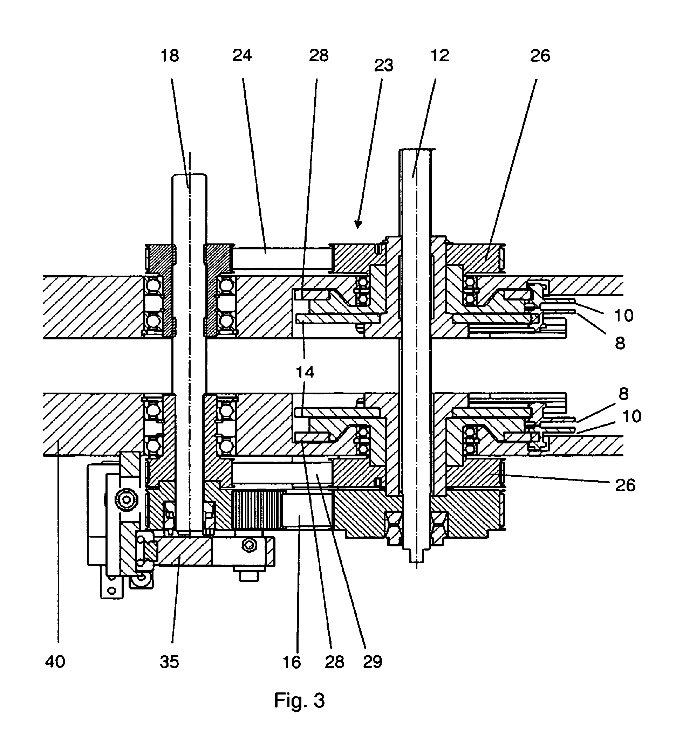

Wie vor allem aus Fig. 2 und 3 ersichtlich ist, treibt eine Antriebswelle 12, die vorzugsweise als Keilwelle ausgebildet ist, eine auf ihr angeordnete Eingriffseinheit 14, etwa ein Kettenrad, an, welche mit der ersten Transporteinheit 8 in Eingriff steht und diese antreibt. Vorzugsweise geschieht dies am Umlenkpunkt der umlaufenden ersten Transporteinheit 8. Die Antriebswelle 12 selbst wird über einen Motor (nicht dargestellt) angetrieben.

Von der Antriebswelle 12 führt ein riemenförmiges oder kettenförmiges Verbindungselement 16 auf eine Hilfswelle 18. Dadurch erfolgt eine Antriebsübertragung von der Antriebswelle 12 auf die Hilfswelle 18, welche in einer Normalbetriebsart damit synchron zur Antriebswelle 12 läuft. Das Verbindungselement 16 ist dabei entweder als Rollenkette oder, wie in den Figuren dargestellt, als Zahnriemen ausgestaltet, und entsprechend sind an der Antriebswelle 12 und der Hilfswelle 18 Kettenräder bzw. Zahnriemenräder 20, 22 angeordnet, welche in Eingriff mit dem Verbindungselement 16 stehen.

Die Hilfswelle 18 treibt die zweite Transporteinheit 10 an. Dies kann beispielsweise über ein auf der Hilfswelle 18 angeordnetes Kettenrad (nicht dargestellt) geschehen, bevorzugt aber ist die von der Hilfswelle 18 angetriebene Eingriffseinheit 23, die zum Eingriff mit der zweiten Transporteinheit 10 dient, drehbar auf der Antriebswelle 12 gelagert. Dies liefert den Vorteil, dass die Kraftübertragung sowohl auf die erste Transporteinheit 8 als auch auf die zweite Transporteinheit 10 nebeneinander und somit im Umlenkbereich der Transporteinheiten 8, 10 erfolgen kann.

In einer bevorzugten Ausführungsform verläuft demnach ein weiterer Riementrieb 24 von der Hilfswelle 18 zur auf der Antriebswelle 12 gelagerten Eingriffseinheit 23, welche in einer bevorzugten Ausführungsform ein drehbar auf der Antriebswelle 12 gelagertes Zahnriemenrad 26 aufweist, welches mit dem Riementrieb 24 verbunden ist und welches fest mit einem ebenfalls drehbar auf der Antriebswelle 12 gelagerten Kettenrad 28 verbunden ist, das wiederum in die zweite umlaufende Transporteinheit 10 eingreift und diese damit antreibt.

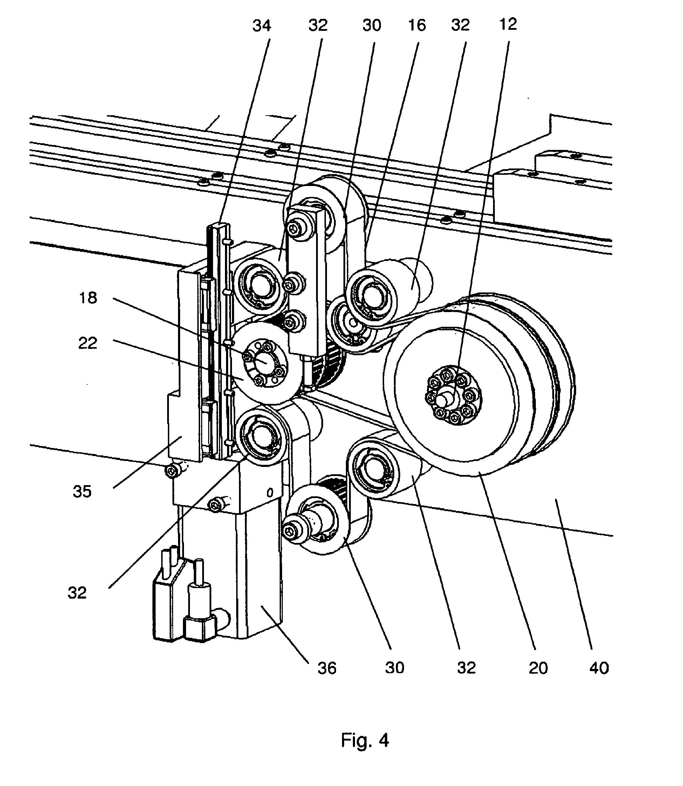

Wie am besten aus Fig. 2 und 4 hervorgeht, verläuft das Verbindungselement 16 zwischen der Antriebswelle 12 und der Hilfswelle 18 im dargestellten Beispielsfall über zwei Verstellrollen 30 sowie vier Hilfsrollen 32. Wenn das Verbindungselement 16 als Zahnriemen ausgestaltet ist, sind die Verstellrollen 30 als Zahnriemenräder ausgebildet, während die Hilfsrollen 32 als glatte Rollen ausgebildet sein können. Wenn das Verbindungselement 16 als Rollenkette ausgebildet ist, sind sowohl die Verstellrollen 30 als auch die Hilfsrollen 32 als Kettenräder ausgebildet.

Im dargestellten Ausführungsbeispiel sind die beiden Verstellrollen 30 übereinander angeordnet und beide in vertikaler Richtung verschiebbar. Außerdem sind beide Verstellrollen 30 gleich groß und werden über dieselbe Weglänge verschoben. Sowohl die Hilfsrollen 32 als auch die Verstellrollen 30 sind achsensymmetrisch zu einer Symmetrieachse angeordnet, welche vorzugsweise durch die Drehachsen der Antriebswelle 12 und der Hilfswelle 18 verläuft. Das Verbindungselement 16 verläuft dabei als umlaufendes Element von der Antriebswelle 12 um eine der Hilfsrollen 32 (90°-Umlenkung), daraufhin um die obere Verstellrolle 30 (180'-Umlenkung), daraufhin um eine weitere Hilfsrolle 32 (Umlenkung um ca. 120°), von dort aus um die Hilfswelle 18 und in einem symmetrischen Verlauf über zwei weitere Hilfsrollen 32 und die untere Verstellrolle 30 wieder zurück zur Antriebswelle 12. Während die Verstellrollen 30 senkrecht zu ihrer Drehachse verschiebbar gelagert sind, sind die Hilfsrollen 32 vorzugsweise stationär gelagert, sodass sie sich zwar drehen können, aber keine Translation möglich ist.

Mit einem solchen Aufbau wird gewährleistet, dass ein Abschnitt des Verbindungselements 16, der in eine der Verstellrollen 30 einläuft, immer parallel verläuft zu einem Abschnitt des Verbindungselements 16, welcher wieder aus der Verstellrolle 30 an ihrer anderen Seite ausläuft (180'-Umlenkung). Dadurch werden längenausgleichende gerade Strecken des Verbindungselements 16 geschaffen, die bei Verschiebung der beiden Verstellrollen 30 in dieselbe Richtung im selben Maß kürzer bzw. länger werden. Werden nun die beiden Verstellrollen 30 nach oben oder unten verschoben, verändern die Verstellrollen 30 durch Lageänderung des Verbindungselements 16 die Winkelposition der Hilfswelle 18. Da von der Hilfswelle 18 der Antrieb auf die zweite Transporteinheit 10 ausgeübt wird, verschiebt sich diese relativ zu der ersten Transporteinheit 8. Im dargestellten Beispielsfall erfolgt dies über Verdrehung des frei drehbar auf der Antriebswelle 12 gelagerten Zahnriemenrades 26 und dem damit fest verbundenen Kettenrad 28.

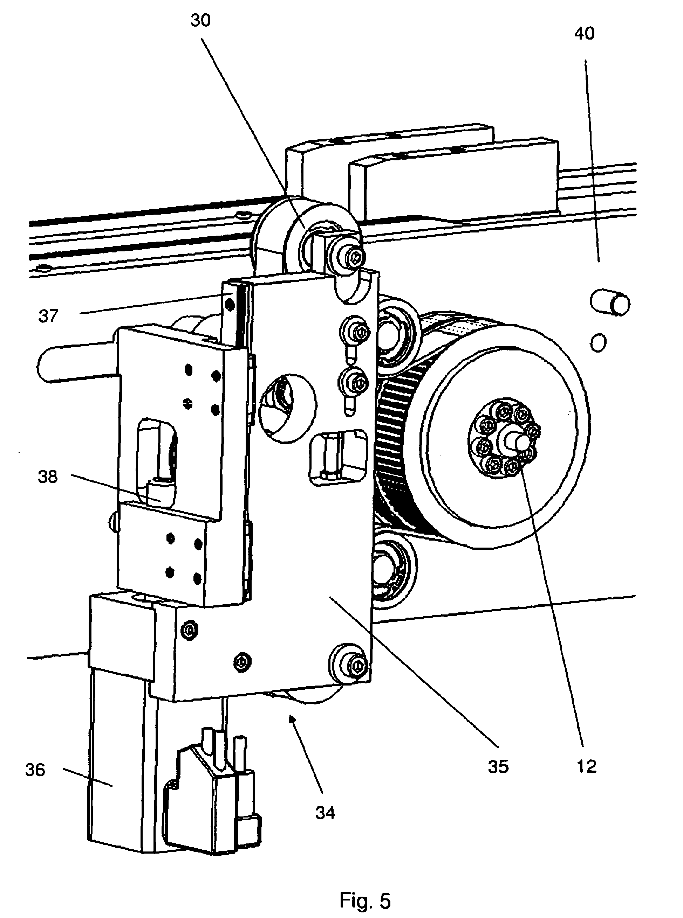

Um die Formatverstellung vollautomatisch und besonders exakt durchführen zu können, sind die Verstellrollen 30 vorzugsweise mittels einer Linearführungseinheit 34 verschiebbar, die in Fig. 5 dargestellt ist. Im dargestellten Beispielsfall weist die Linearführungseinheit 34 eine Formatverstellplatte 35 auf, an der die Verstellrollen 30 befestigt sind, beispielsweise verschraubt. Die Formatverstellplatte 35 kann beispielsweise mittels eines Verstellmotors 36 in einer oder mehreren geraden Führungsschienen 37 verschoben werden. Der Verstellmotor 36 sollte dabei einen integrierten Absolutgeber aufweisen. Auch ein Servomotor kann verwendet werden. Der Verstellmotor 36 kann beispielsweise eine Spindel 38 antreiben, welche in ein Gewinde der Formatverstellplatte 35 eingreift. Gleichzeitig können die stationär gelagerten Hilfsrollen 32 an einer Basisplatte 40 (sieh Fig. 4) der Vorrichtung befestigt sein.

Neben der dargestellten Ausführungsform existieren viele weitere Ausführungsformen, welche unter die Erfindung fallen. Beispielsweise können mehr als zwei Verstellrollen 30 vorgesehen sein, ebenso eine beliebige Anzahl an Hilfsrollen 32. Auch kann sowohl die Größe der einzelnen Verstellrollen 30 untereinander variieren als auch deren Lage und Anordnung, die nicht zwangsweise symmetrisch und nicht übereinander sein muss. Ebenso ist eine Verschiebung der Verstellrollen 30 in vertikaler Richtung nicht vorgeschrieben, denn bei geeigneter Führung des Verbindungselements 16 ist auch eine horizontale Verschiebung der Verstellrollen 30 denkbar. Ebenso ist bei unterschiedlich großen Verstellrollen 30 oder bei einer ungeraden Anzahl von Verstellrollen 30 ein verschiedener Verfahrweg der Verstellrollen 30 möglich. Wichtig hierbei ist immer, dass der Gesamtweg des Verbindungselements 16, der durch die Länge des Verbindungselements 16 definiert ist, konstant bleibt und dass durch die Verschiebung der Verstellrollen 30 aufgrund der geeigneten Führung des Verbindungselements 16 eine Bewegung des Verbindungselements 16 auf der Hilfswelle 18 und damit eine Veränderung der Winkelposition der Hilfswelle 18 bewirkt wird.

Einige der oben beschriebenen Elemente der Antriebssektion sind vorzugsweise mehrfach spiegelbildlich zur Längsachse der Vorrichtung vorhanden, um einen gleichmäßigen Antrieb zu gewährleisten. Wie vor allem aus Fig. 2 ersichtlich ist, betrifft dies die erste Transporteinheit 8 mit den ersten Mitnahmeelementen 4, die zweite Transporteinheit 10 mit den zweiten Mitnahmeelementen 6, die Eingriffseinheiten 14 und 23 sowie den Riementrieb 24.

Alternativ zu einer Verstellung der Verstellrollen 30 mit dem Verstellmotor 36 ist auch eine manuelle Verschiebung der Verstellrollen 30 oder ein manuelles Verdrehen der Spindel 38 mit Digitalanzeige denkbar.

## Patentansprüche

1. Vorrichtung zum Fördern von Gegenständen (2) in Verpackungsmaschinen mit
einer ersten umlaufenden Transporteinheit (8), die erste Mitnahmeelemente (4) bewegt,
einer zweiten umlaufenden Transporteinheit (10), die zweite Mitnahmeelemente bewegt (6),
einer von einem Motor angetriebenen Antriebswelle (12), welche die erste umlaufende Transporteinheit (8) antreibt,
einer Hilfswelle (18), welche die zweite umlaufende Transporteinheit (10) antreibt, und
einem riemenförmigen oder kettenförmigen Verbindungselement (16) zur Antriebsübertragung von der Antriebswelle (12) auf die Hilfswelle (18),
**dadurch gekennzeichnet, dass**
das Verbindungselement (16) zwischen der Antriebswelle (12) und der Hilfswelle (18) über eine Mehrzahl von stationär gelagerten Hilfsrollen (32) und über mindestens zwei senkrecht zu ihrer Drehachse gleichzeitig verschiebbare Verstellrollen (30) derart geführt ist, dass eine Verschiebung der Verstellrollen (30) eine Bewegung des Verbindungselements (16) auf der Hilfswelle (18) und damit eine Veränderung der Winkelposition der Hilfswelle (18) bewirkt.

2. Vorrichtung nach Anspruch 1, **dadurch gekennzeichnet, dass** die Verstellrollen (30) in dieselbe Richtung verschiebbar sind.

3. Vorrichtung nach Anspruch 1 oder 2, **dadurch gekennzeichnet, dass** die Verstellrollen (30) gleich groß sind und um dieselbe Weglänge verschiebbar sind.

4. Vorrichtung nach einem der vorangehenden Ansprüche, **dadurch gekennzeichnet, dass** sowohl die Hilfsrollen (32) als auch die Verstellrollen (30) achsensymmetrisch zu einer Symmetrieachse angeordnet sind.

5. Vorrichtung nach Anspruch 4, **dadurch gekennzeichnet, dass** die Symmetrieachse durch die Drehachsen der Antriebswelle (12) und der Hilfswelle (18) verläuft.

6. Vorrichtung nach einem der vorangehenden Ansprüche, **dadurch gekennzeichnet, dass** ein Abschnitt des Verbindungselements (16), welcher in eine der Verstellrollen (30) einläuft, parallel verläuft zu einem Abschnitt des Verbindungselements (16), welcher aus der Verstellrolle (30) ausläuft.

7. Vorrichtung nach einem der vorangehenden Ansprüche, **dadurch gekennzeichnet, dass** das Verbindungselement (16) ein Zahnriemen ist, auf der Antriebswelle (12) und der Hilfswelle (18) jeweils ein Zahnriemenrad (20, 22) angeordnet ist und die Verstellrollen (30) Zahnriemenräder sind.

8. Vorrichtung nach einem der Ansprüche 1 bis 6, **dadurch gekennzeichnet, dass** das Verbindungselement (16) eine Rollenkette ist, auf der Antriebswelle (12) und der Hilfswelle (18) jeweils ein Kettenrad (20, 22) angeordnet ist und die Verstellrollen (30) Kettenräder sind.

9. Vorrichtung nach einem der vorangehenden Ansprüche, **dadurch gekennzeichnet, dass** die Verstellrollen (30) mittels einer Linearführungseinheit (34) verschiebbar sind.

10. Vorrichtung nach Anspruch 9, **dadurch gekennzeichnet, dass** die Linearführungseinheit (34) eine Formatverstellplatte (35) aufweist, die fest mit den Verstellrollen (30) verbunden ist und in mindestens einer geraden Führungsschiene (37) geführt ist.

11. Vorrichtung nach Anspruch 9 oder 10, **dadurch gekennzeichnet, dass** ein Verstellmotor (36) mit integriertem Absolutgeber zur Verschiebung der Verstellrollen (30) vorgesehen ist.

12. Vorrichtung nach Anspruch 11, **dadurch gekennzeichnet, dass** der Verstellmotor (36) eine Spindel (38) der Linearführungseinheit (34) antreibt.

13. Vorrichtung nach einem der vorangehenden Ansprüche, **dadurch gekennzeichnet, dass** die Hilfswelle (18) mittels eines Riementriebs (24) mit einer drehbar auf der Antriebswelle (12) gelagerten Eingriffseinheit (23) verbunden ist, die mit der zweiten umlaufenden Transporteinheit (10) in Eingriff steht und diese damit antreibt.

14. Vorrichtung nach Anspruch 13, **dadurch gekennzeichnet, dass** die Eingriffseinheit (23) ein drehbar auf der Antriebswelle (12) gelagertes Zahnriemenrad (26) aufweist, welches mit dem Riementrieb (24) verbunden ist und welches fest mit einem ebenfalls drehbar auf der Antriebswelle (12) gelagerten Kettenrad (28) verbunden ist, das wiederum in die zweite umlaufende Transporteinheit (10) eingreift und diese damit antreibt.

## Claims

1. Device for conveying objects (2) in packaging machines, comprising a first endless transport unit (8), which moves first driver elements (4),
a second endless transport unit (10), which moves second driver elements (6),
a drive shaft (12), which is driven by a motor and which drives the first endless transport unit (8),
an auxiliary shaft (18), which drives the second endless transport unit (10) and
a belt-style or chain-style connecting element (16) for transmitting drive power from the drive shaft (12) to the auxiliary shaft (18),
**characterised in that** the connecting element (16) between the drive shaft (12) and the auxiliary shaft (18) is guided over a plurality of stationary auxiliary rollers (32) and over at least two adjusting rollers (30), which are simultaneously shiftable in a direction perpendicular to the axes of rotation of the adjusting rollers (30), the connecting element (16) being guided in such a way that a shift of the adjusting rollers (30) brings about a movement of the connecting element (16) on the auxiliary shaft (18) and thus a change in the angular position of the auxiliary shaft (18).

2. Device according to claim 1, **characterised in that** the adjusting rollers (30) are shiftable in the same direction.

3. Device according to either claim 1 or claim 2, **characterised in that** the adjusting rollers (30) are of equal size and are shiftable by the same distance.

4. Device according to any of the preceding claims, **characterised in that** both the auxiliary rollers (32) and the adjusting rollers (30) are arranged in axially symmetric fashion with respect to an axis of symmetry.

5. Device according to claim 4, **characterised in that** the axis of symmetry passes through the axes of rotation of the drive shaft (12) and of the auxiliary shaft (18).

6. Device according to any of the preceding claims, **characterised in that** a portion of the connecting element (16) which is entering one of the adjusting rollers (30) extends parallel to a portion of the connecting element (16) which is leaving the adjusting roller (30).

7. Device according to any of the preceding claims, **characterised in that** the connecting element (16) is a toothed belt, a toothed belt pulley (20, 22) is mounted on the drive shaft (12) and on the auxiliary shaft (18), and the adjusting rollers (30) are toothed belt pulleys.

8. Device according to any of the preceding claims 1 to 6, **characterised in that** the connecting element (16) is a roller chain, a sprocket (20, 22) is mounted on the drive shaft (12) and on the auxiliary shaft (18), and the adjusting rollers (30) are sprockets.

9. Device according to any of the preceding claims, **characterised in that** the adjusting rollers (30) are shiftable by means of a linear guide unit (34).

10. Device according to claim 9, **characterised in that** the linear guide unit (34) comprises a format adjusting plate (35), which is permanently connected to the adjusting rollers (30) and is guided in at least one straight guide rail (37).

11. Device according to either claim 9 or claim 10, **characterised in that** an adjusting motor (36) with an integrated absolute encoder is provided to shift the adjusting rollers (30).

12. Device according to claim 11, **characterised in that** the adjusting motor (36) drives a spindle (38) of the linear guide unit (34).

13. Device according to any of the preceding claims, **characterised in that** the auxiliary shaft (18) is connected by a belt drive (24) to an engagement unit (23) supported rotatably on the drive shaft (12), which engagement unit (23) engages with the second endless transport unit (10) and thus drives it.

14. Device according to claim 13, **characterised in that** the engagement unit (23) comprises a toothed belt pulley (26) supported rotatably on the drive shaft (12), which pulley (26) is connected to the belt drive (24) and is permanently connected to a sprocket (28), also supported rotatably on the drive shaft (12), which sprocket (28) in turn engages in the second endless transport unit (10) and thus drives it.

## Revendications

1. Dispositif de transport d'objets (2) dans des machines d'emballage, comprenant
une première unité de transport (8) rotative, qui déplace des premiers éléments d'entraînement (4),
une seconde unité de transport (10) rotative, qui déplace des seconds éléments d'entraînement (6),
un arbre moteur (12) entraîné par un moteur, qui entraîne la première unité de transport (8) rotative,
un arbre auxiliaire (18), qui entraîne la seconde unité de transport (10) rotative, et
un élément de liaison (16), en forme de courroie ou de chaîne, pour transmettre l'entraînement de l'arbre moteur (12) à l'arbre auxiliaire (18),
**caractérisé en ce que**
l'élément de liaison (16) est guidé entre l'arbre moteur (12) et l'arbre auxiliaire (18) par l'intermédiaire d'une pluralité de rouleaux auxiliaires (32) supportés stationnaires et d'au moins deux rouleaux de réglage (30) déplaçables simultanément de façon perpendiculaire à leur axe de rotation, de telle sorte qu'un déplacement des rouleaux de réglage (30) provoque un déplacement de l'élément de liaison (16) sur l'arbre auxiliaire (18) et ainsi une modification de la position angulaire de l'arbre auxiliaire (18).

2. Dispositif selon la revendication 1, **caractérisé en ce que** les rouleaux de réglage (30) sont déplaçables dans la même direction.

3. Dispositif selon l'une des revendications 1 et 2, **caractérisé en ce que** les rouleaux de réglage (30) sont de dimension égale et déplaçables de la même longueur de parcours.

4. Dispositif selon l'une des revendications précédentes, **caractérisé en ce qu'**aussi bien les rouleaux auxiliaires (32) que les rouleaux de réglage (30) sont disposés symétriquement par rapport à un axe de symétrie.

5. Dispositif selon la revendication 4, **caractérisé en ce que** l'axe de symétrie passe par les axes de rotation de l'arbre moteur (12) et de l'arbre auxiliaire (18).

6. Dispositif selon l'une des revendications précédentes, **caractérisé en ce qu'**une section de l'élément de liaison (16), qui entre dans l'un des rouleaux de réglage (30), s'étend parallèlement à une section de l'élément de liaison (16), qui sort du rouleau de réglage (30).

7. Dispositif selon l'une des revendications précédentes, **caractérisé en ce que** l'élément de liaison (16) est une courroie dentée, une roue dentée à courroie (20, 22) est respectivement disposée sur l'arbre moteur (12) et sur l'arbre auxiliaire (18), et les rouleaux de réglage (30) sont des roues dentées à courroie.

8. Dispositif selon l'une des revendications 1 à 6, **caractérisé en ce que** l'élément de liaison (16) est une chaîne à rouleaux, une roue dentée à chaîne (20, 22) est respectivement disposée sur l'arbre moteur (12) et sur l'arbre auxiliaire (18), et les rouleaux de réglage (30) sont des roues dentées à chaîne.

9. Dispositif selon l'une des revendications précédentes, **caractérisé en ce que** les rouleaux de réglage (30) sont déplaçables au moyen d'une unité de guidage linéaire (34).

10. Dispositif selon la revendication 9, **caractérisé en ce que** l'unité de guidage linéaire (34) présente une plaque de réglage de format (35), qui est assemblée fixement avec les rouleaux de réglage (30) et est guidée dans au moins un rail de guidage rectiligne (37).

11. Dispositif selon l'une des revendications 9 et 10, **caractérisé en ce qu'**un moteur de réglage (36) à capteur absolu intégré est prévu pour le déplacement des rouleaux de réglage (30).

12. Dispositif selon la revendication 11, **caractérisé en ce que** le moteur de réglage (36) entraîne une broche (38) de l'unité de guidage linéaire (34).

13. Dispositif selon l'une des revendications précédentes, **caractérisé en ce que** l'arbre auxiliaire (18) est relié au moyen d'un entraînement par courroie (24) avec une unité de prise (23) montée tournante sur l'arbre moteur (12), laquelle unité est en prise avec la seconde unité de transport (10) rotative et entraîne ainsi cette dernière.

14. Dispositif selon la revendication 13, **caractérisé en ce que** l'unité de prise (23) présente une roue dentée à courroie (26) montée tournante sur l'arbre moteur (12), laquelle roue est assemblée avec l'entraînement par courroie (24) et est reliée fixement avec une roue dentée à chaîne (28), également montée tournante sur l'arbre moteur (12) et qui s'engage pour sa part dans la seconde unité de transport (10) rotative et entraîne ainsi cette dernière.
